# EUROPÄISCHE PATENTANMELDUNG

(11) **EP 0 977 341 A2**
(43) Veröffentlichungstag der Anmeldung: **02.02.2000**
(21) Anmeldenummer: 99113273.9
(22) Anmeldetag: 08.07.1999
(51) Int. Cl.: H02K 5/22

(54) **Baueinheit aus einer elektrischen Maschine und einer Leistungselektronikeinheit**

(30) Priorität: 15.07.1998 DE 19831829
(71) Anmelder: STILL GMBH, D-22113 Hamburg (DE)
(72) Erfinder: Fromme, Georg, Dr. Dipl.Ing., 21217 Seevetal 2 (DE); Mittmann, Hans-Georg, Dipl.-Ing., 21465 Wentorf (DE); Hinkelmann, Martin, Dipl.-Ing., 21039 Escheburg (DE); Leifert, Torsten, Dr. Dipl.Ing., 21360 Vögelsen (DE)
(74) Vertreter: Kasseckert, Rainer

(57) **Zusammenfassung**

Gegenstand der Erfindung ist eine Baueinheit aus einer elektrischen Maschine (1) und einer Leistungselektronikeinheit (2) zur Verwendung in einem Fahrzeug. Erfindungsgemäß ist ein Gehäuseteil (4) der elektrischen Maschine (1) mit einem Gehäuseteil (8) der Leistungselektronikeinheit (2) an einer Trennfuge (7) verbunden, wobei im Bereich der Trennfuge (7) elektrische Druckkontakte angeordnet sind. Jeder Druckkontakt weist eine an der Leistungselektronikeinheit (2) angeordnete und eine an der elektrischen Maschine (1) angeordnete Kontaktfläche (11, 12) auf. Mindestens eine Kontaktfläche (11, 12) eines Druckkontakts ist in Richtung der anderen Kontaktfläche (12, 11) des selben Druckkontakts federbelastet.

## Beschreibung

Die Erfindung betrifft eine Baueinheit aus einer elektrischen Maschine und einer Leistungselektronikeinheit zur Verwendung in einem Fahrzeug.

Baueinheiten dieser Art werden in elektrisch angetriebenen Fahrzeugen, beispielsweise in Flurförderzeugen verwendet. Bei der Leistungselektronikeinheit handelt es sich häufig um einen Umrichter. Die elektrische Maschine kann beispielsweise als Antriebsmotor des Fahrzeugs ausgeführt sein. Hierbei wird der Antriebsmotor über die Leistungselektronikeinheit mit elektrischer Energie versorgt. In einem anderen Anwendungsfall, beispielsweise bei einem Fahrzeug mit dieselelektrischem Antrieb, kann die elektrische Maschine als Generator ausgeführt sein, wobei die von dem Generator erzeugte elektrische Energie der Leistungselektronikeinheit zugeführt wird.

Bei bekannten Baueinheiten der genannten Art sind die elektrische Maschine und die Leistungselektronikeinheit getrennt voneinander angeordnet. Häufig sind ein Gehäuse der elektrischen Maschine und ein Gehäuse der Leistungselektronikeinheit getrennt voneinander an einem Rahmen des Fahrzeugs befestigt. Eine elektrische Verbindung der elektrischen Maschine mit der Leistungselektronikeinheit wird üblicherweise mit Kabeln und elektrischen Schraubverbindungen hergestellt. Die Ausführung und die Art der verwendeten Kabel und Schraubverbindungen richten sich nach den Größen des zu übertragenden Stromes und der auftretenden Spannungen. Da die elektrischen Schraubverbindungen vor äußeren Einflüssen wie Schmutz oder Feuchtigkeit geschützt werden müssen, sind bei bekannten gattungsgemäßen Baueinheiten die Schraubverbindungen mit einer zusätzlichen Abdeckung versehen.

Die Herstellung und Wartung von bekannter Baueinheiten gestaltet sich zeitaufwendig und materialintensiv. Der vorliegenden Erfindung liegt daher die Aufgabe zugrunde, eine einfach herstellbare Baueinheit aus einer elektrischen Maschine und einer Leistungselektronikeinheit zur Verwendung in einem Fahrzeug zur Verfügung zu stellen.

Diese Aufgabe wird erfindungsgemäß dadurch gelöst, daß ein Gehäuseteil der elektrischen Maschine mit einem Gehäuseteil der Leistungselektronikeinheit an einer Trennfuge verbunden ist und im Bereich der Trennfuge elektrische Druckkontakte angeordnet sind. Die Trennfuge ist vorzugsweise flächig ausgebildet. Die Leistungselektronikeinheit wird direkt auf der elektrischen Maschine, beispielsweise durch Verschrauben befestigt, wobei die flächige Trennfuge entsteht.

Die sich im Bereich der Trennfuge befindenden Druckkontakte werden bei der Montage der Leistungselektronikeinheit an der elektrischen Maschine automatisch geschlossen. Hierbei weist jeder Druckkontakt eine an der Leistungselektronikeinheit angeordnete und eine an der elektrischen Maschine angeordnete Kontaktstelle auf.

Um einen sicheren elektrischen Kontakt zu gewährleisten und mögliche Fertigungstoleranzen auszugleichen, ist mindestens eine Kontaktstelle eines Druckkontakts in Richtung der anderen Kontaktstelle des selben Druckkontakts federbelastet.

Zweckmäßigerweise ist im Bereich der Trennfuge mindestens eine Dichtung angeordnet. Die Dichtung ist zwischen den Gehäuseteilen der Leistungselektronikeinheit und der elektrischen Maschine angeordnet und schützt die Druckkontakte vor äußeren Einflüssen wie Staub und Feuchtigkeit.

Wenn im Bereich der Trennfuge ein Mittel zum Zentrieren der Kontaktstellen angeordnet ist, können die Leistungselektronikeinheit und die elektrische Maschine nur in der vorgesehenen Position miteinander verbunden werden. Das Entstehen von unerwünschten elektrischen Verbindungen oder Kurzschlüssen ist damit praktisch ausgeschlossen.

Die elektrischen Druckkontakte sind zumindest teilweise zur elektrischen Verbindung der Leistungselektronikeinheit mit der elektrischen Maschine vorgesehen. Zwischen der elektrischen Maschine und der Leistungselektronikeinheit sind somit keine außerhalb der Gehäuse liegenden Kabelverbindungen erforderlich.

Gemäß einer vorteilhaften Weiterbildung der Erfindung sind die elektrischen Druckkontakte zumindest teilweise zur elektrischen Verbindung der Leistungselektronikeinheit mit weiteren elektrischen Bauteilen des Fahrzeugs vorgesehen, wobei Leitungen zu diesen Bauteilen durch das Gehäuseteil der elektrischen Maschine geführt sind. Als weitere elektrische Bauteile kommen beispielsweise ein Bremswiderstand oder eine Stromversorgungseinheit in Betracht. Auf diese Weise können sämtliche elektrische Anschlüsse der Leistungselektronikeinheit als Druckkontakte ausgeführt werden, wobei frei liegende Leitungen gänzlich vermieden werden können.

Zusammenfassend werden durch die erfindungsgemäße Ausbildung der elektrischen Verbindungen als Druckkontakte folgende Vorteile erzielt:
- Montagebedingte Fehler, wie z.B. ein Verwechseln der Anschlüsse oder ein unzureichendes Anziehen der bisher verwendeten Schraubverbindungen ist ausgeschlossen.
- Die Montagezeit wird stark reduziert, da die Kontaktierung mit der Montage der Leistungselektronikeinheit abgeschlossen ist.
- Ein schnelles und fehlerfreies Auswechseln der elektrischen Komponenten ist auch unter erschwerten äußeren Bedingungen, beispielsweise im Zuge von Servicearbeiten am Einsatzort des Fahrzeugs, möglich.
- Abgesehen von der Abdichtung der Trennfuge sind keine besonderen Maßnahmen zum Schutz gegen äußere Einflüsse erforderlich.

Weitere Vorteile und Einzelheiten der Erfindung werden anhand des in den schematischen Figuren dargestellten Ausführungsbeispiels näher erläutert. Dabei zeigt
- Figur 1: Gehäuseteile der elektrischen Maschine und der Leistungselektronikeinheit mit Druckkontakten in zusammengefügtem Zustand,
- Figur 2: das Gehäuseteil der elektrischen Maschine,
- Figur 3: das Gehäuseteil der Leistungselektronikeinheit.

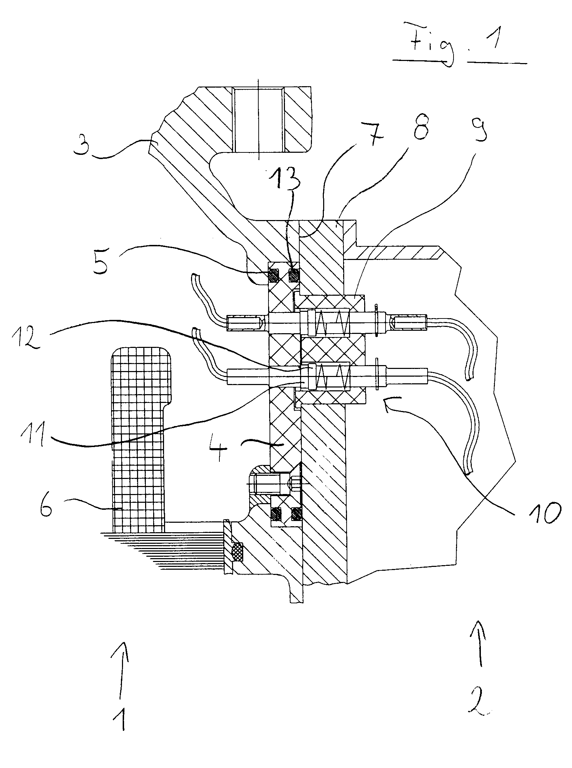

Figur 1 zeigt einen Ausschnitt einer elektrischen Maschine 1 und einen Ausschnitt einer Leistungselektronikeinheit 2. In ein Metallgehäuse 3 der elektrischen Maschine ist als Gehäuseteil 4 eine aus Kunststoff ausgebildete Anschlußplatte eingesetzt und gegenüber dem Metallgehäuse 3 mittels einer Dichtung 5 abgedichtet. Zu erkennen ist weiterhin ein Teil einer Statorwicklung 6 der elektrischen Maschine 1. In diesem Ausführunsbeispiel ist die elektrische Maschine 1 als Motor, vorzugsweise als Drehstrommotor ausgeführt.

Eine flächige Trennfuge 7 trennt das Gehäuse 3, 4 der elektrischen Maschine 1 von einem Gehäuse 8, 9 der Leistungselektronikeinheit 2, die im vorliegenden Ausführungsbeispiel als Umrichter ausgeführt ist. Hierbei ist das Gehäuseteil 8 der Leistungselektronikeinheit von einer Aluminiumplatte und das Gehäuseteil 9 von einer isolierenden Anschlußplatte gebildet. Eine umlaufende Dichtung 13 schützt die im Bereich der Trennfuge 7 angeordneten elektrischen Elemente vor äußeren Einflüssen.

Erfindungsgemäß weisen die Gehäuseteile 4 und 9 im Bereich der Trennfuge 7 elektrische Druckkontakte 10 auf. Die Druckkontakte werden bei einem Zusammenfügen der Gehäuseteile 4 und 9 automatisch geschlossen, wobei zwei Kontaktflächen 11, 12 aufeinander gedrückt werden.

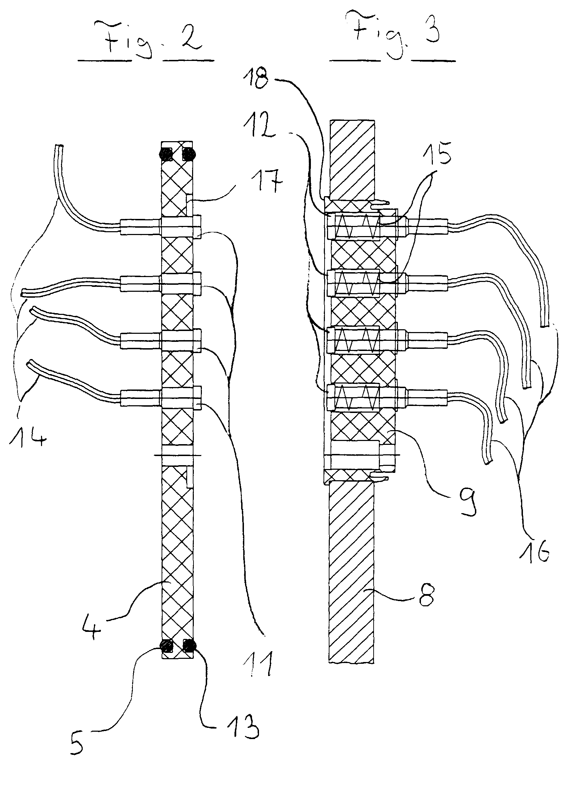

Der Aufbau der Druckkontakte wird durch die Figuren 2 und 3 verdeutlicht, wobei Figur 2 das Gehäuseteil 4 der elektrischen Maschine und Figur 3 die Gehäuseteile 8, 9 der Leistungselektronikeinheit zeigt. Die Kontakflächen 11 an der elektrischen Maschine sind starr an dem Gehäuseteil 4 befestigt und sind über Kabel 14 mit den entsprechenden Anschlüssen der elektrischen Maschine 1 oder mit anderen, außerhalb der elektrischen Maschine 1 angeordneten Aggregate verbunden.

In dem Gehäuseteil 9 der Leistungselektronikeinheit befinden sich die Kontaktstellen 12, welche in Richtung zu den Kontaktstellen 11 mittels Druckfedern 15 vorgespannt sind. Die Druckfedern sorgen für eine jederzeit ausreichende Druckkraft zwischen den Kontaktstellen 11 und 12. Elektrische Kabel 16 verbinden die Kontaktstellen 12 mit den entsprechenden Anschlüssen der Leistungselektronikeinheit 2.

Das Gehäuseteil 4 der elektrischen Maschine weist eine umlaufende Ausnehmung 17 auf, die mit einer umlaufenden Erhöhung 18 des Gehäuseteils 8 der Leistungselektronikeinheit 2 korrespondiert. Mit diesen Elementen werden die Gehäuseteile 4 und 8 zueinander zentriert, so daß eine falsche Kontaktierung der Kontaktstellen sicher verhindert ist.

## Patentansprüche

1. Baueinheit aus einer elektrischen Maschine (1) und einer Leistungselektronikeinheit (2) zur Verwendung in einem Fahrzeug, **dadurch gekennzeichnet**, daß ein Gehäuseteil (4) der elektrischen Maschine (1) mit einem Gehäuseteil (8) der Leistungselektronikeinheit (2) an einer Trennfuge (7) verbunden ist und im Bereich der Trennfuge (7) elektrische Druckkontakte angeordnet sind.

2. Baueinheit nach Anspruch 1, dadurch gekennzeichnet, daß jeder Druckkontakt eine an der Leistungselektronikeinheit (2) angeordnete und eine an der elektrischen Maschine (1) angeordnete Kontaktfläche (11, 12) aufweist.

3. Baueinheit nach Anspruch 1 oder 2, dadurch gekennzeichnet, daß mindestens eine Kontaktfläche (11, 12) eines Druckkontakts in Richtung der anderen Kontaktfläche (12, 11) des selben Druckkontakts federbelastet ist.

4. Baueinheit nach einem der Ansprüche 1 bis 3, dadurch gekennzeichnet, daß im Bereich der Trennfuge (7) mindestens eine Dichtung (13) angeordnet ist.

5. Baueinheit nach einem der Ansprüche 1 bis 4, dadurch gekennzeichnet, daß im Bereich der Trennfuge (7) ein Mittel zum Zentrieren der Kontaktflächen (11, 12) angeordnet ist.

6. Baueinheit nach einem der Ansprüche 1 bis 5, dadurch gekennzeichnet, daß die elektrischen Druckkontakte zumindest teilweise zur elektrischen Verbindung der Leistungselektronikeinheit (2) mit der elektrischen Maschine (1) vorgesehen sind.

7. Baueinheit nach einem der Ansprüche 1 bis 6, dadurch gekennzeichnet, daß die elektrischen Druckkontakte zumindest teilweise zur elektrischen Verbindung der Leistungselektronikeinheit (2) mit weiteren elektrischen Bauteilen des Fahrzeugs vorgesehen sind, wobei Leitungen zu diesen Bauteilen durch das Gehäuseteil (4) der elektrischen Maschine (1) geführt sind.

8. Elektrische Maschine zur Verwendung in einer Baueinheit nach einem der Ansprüche 1 bis 7.

9. Leistungselektronikeinheit zur Verwendung in einer Baueinheit nach einem der Ansprüche 1 bis 7.
